# EUROPEAN PATENT APPLICATION

(11) **EP 1 615 112 A1**
(43) Date of publication of application: **11.01.2006**
(21) Application number: 04254079.9
(22) Date of filing: 07.07.2004
(51) Int. Cl.: G06F 3/033

(54) **Improvements relating to computer navigation devices**

(71) Applicant: STMicroelectronics Limited, Marlow, Buckinghamshire SL7 1YL (GB); STMicroelectronics S.A., 92120 Montrouge (FR)
(72) Inventor: Raynor, Jeffrey, Edinburgh EH12 5HZ (GB); Mellot, Pascal, 88250 Lans en Vercors (FR)
(74) Representative: Cooper, John

(57) **Abstract**

An optical mouse has an image sensor (12) providing image data via an ADC (14) to a correlation circuit (16) and a motion estimation circuit (18) to provide output signals representative of mouse motion. The output signals are disabled when the mouse is lifted away from the working surface. This is achieved by summing each frame, after filtering in a high-pass filter (22), in a summer (26) to provide a single value, and comparing this with a threshold. If the filtered and summed value exceeds the threshold, this indicates that the image contains in-focus objects, and thus that the mouse is on the working surface.

## Description

This invention relates to computer navigation devices, or mice, and to integrated circuits suitable for use in such devices.

It is well known that roller-ball type mice suffer from problems arising from the use of mechanical components. Optical mice are readily available and overcome some of these problems. However, optical mice may suffer from other problems which hinder their acceptability.

One of these is the inability of optical mice currently available to deal with the common use of lifting the mouse to deal with space limitations.

During mouse movement, it is common for a user to lift the mouse from the surface in order to move the PC's cursor further on the screen. For example, if mouse movement is limited to 20cm and this motion will move the cursor half-way across the screen, if the mouse user has moved the mouse to the right-most position available (i.e. limited by mouse mat or space available on desk), the user will lift the mouse, move it to the left-most position possible, replace the mouse, and then move the mouse again to the right in order to move the cursor the whole width of the screen.

This technique works for mechanical mice as the ball does not rotate during the lift-off and repositioning. However, optical mice may "see" features during this procedure, leading to undesired cursor movement.

This problem has received attention in the prior art.

US6,281,882 (Gordon) suggests the use of a correlation product from the mouse's tracking algorithm. Although this system will correctly identify lift-off, it will fail if the mouse is moving very quickly as the amount of correlation in the image will also be reduced by the motion.

US6433780 (Gordon) proposes other methods including (Fig. 4) a mechanical switch on the base of the mouse to detect lift-off. Although this will work, it adds to the complexity and cost of the mouse, and the additional mechanical features will reduce reliability. An alternative in this document is to provide a special switch which the user can press to suppress cursor movement. This adds an extra burden to the user and is undesirable. This document does mention (col. 6 lines 30-39) that the image will not be focused during lift-off, but does not disclose any method for detecting or using the loss of focus.

An object of the present invention is to provide an optical navigation device in which these problems are eliminated or reduced.

The invention provides a method of detecting whether an optical mouse is in contact with a working surface, the optical mouse having an image sensor focused to image the working surface and being arranged to provide signals corresponding to said image; the method characterised by analysing said signals to determine whether the image contains in-focus objects, and disabling the mouse motion output when no in-focus objects are found.

Thus, the invention permits lift-off of the mouse to be detected without the use of electromechanical parts.

The signals are preferably analysed by summing the output of the whole or a majority of each frame, comparing the summed output with a threshold value, and assessing the frame as containing in-focus objects when the threshold value is exceeded.

In one form of the method, the image sensor output is high-pass filtered before being analysed; the high-pass filtered signal may also be used is input to a correlation circuit which supplies a motion estimation circuit.

From another aspect, the invention provides an optical mouse An optical mouse comprising an image sensor positioned so as, in use, to form an image of a working surface on which the mouse is used, motion signal means for producing an output signal representing XY motion of the mouse on the working surface by processing the output of the image sensor, and lift-off detection means for detecting the mouse being lifted away from the working surface, the lift-off detection means being arranged to disable said output signal during lift-off. The optical mouse of the invention is characterised in that said lift-off detection means comprises means for determining whether the image contains in-focus objects.

The lift-off detection means suitably comprises a summing circuit arranged to sum the output of the whole or a majority of each frame, and a comparison circuit arranged to compare the summed output with a threshold value and to assess the frame as containing in-focus objects when the threshold value is exceeded.

In a preferred embodiment, the mouse further includes a high-pass filter interposed between the image sensor and the summing circuit. The motion signal means may be connected to receive the output of the high-pass filter. The motion signal means may comprise a correlation circuit providing a measure of the correlation of successive image frames, and a motion estimation circuit deriving a motion signal from said correlation.

A further aspect of the invention resides in an integrated circuit comprising an image sensor having an array of pixels and operable to read out pixel values to form a picture signal; analog-to-digital conversion means operable to convert said picture signal to digital format; and image processing means operable to perform correlation on successive frames of the picture signal to derive information therefrom; characterised by lift-off detection means connected between the analog-to-digital conversion means and the image processing means, said lift-off detection means comprising a summing circuit arranged to sum the output of the whole or a majority of each frame, and a comparison circuit arranged to compare the summed output with a threshold value.

Other features and advantages of the invention will be apparent from the claims and from the following description.

An embodiment of the invention will now be described, by way of example only, with reference to the drawings, in which:
Fig. 1 is a schematic diagram illustrating the operation of a prior art optical mouse; and
Fig. 2 is a similar illustration of one embodiment of the present invention.

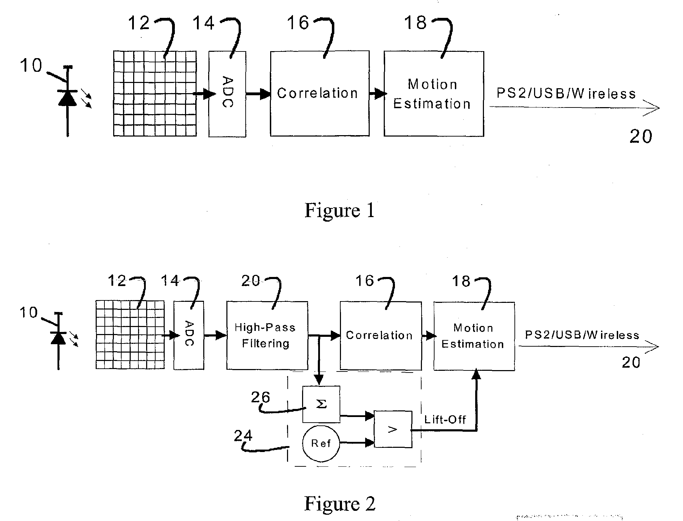

Referring to Fig. 1, in a prior art optical mouse a LED 10 illuminates an area under the mouse which is imaged by a solid state image sensor 12. The output of the image sensor 12 is converted to digital form by analog to digital converter 14, and the digital signal is fed to a correlation circuit 16. The correlation circuit produces a measure of correlation between subsequent fields of the image, which is converted by a motion estimation circuit 18 into XY motion signals transmitted by any suitable format as at 20.

In the embodiment shown in Fig. 2, similar parts are denoted by like references. However, the output of the ADC 14 is filtered by a high-pass filter 22 before being passed to the correlation circuit 16. This filtering reduces the effect of uneven illumination by the LED 10 and enhances the edges of objects in the field of view. The use of such filtering in processing image signals is the subject of our copending application (ref. P37799) filed concurrently and incorporated herewith by reference.

The output of the high-pass filter 22 is also passed to a lift-off detection circuit 24, in which a summer 26 sums all (or a large proportion) of each frame of the data, that is, a whole image is reduced to a single value. This value is then compared against a reference threshold. If it is greater than the threshold then there is useful image present and the correlation data is used. If the summed value is less than or equal to the threshold, then there is not enough detail in the image for it to be useful and the correlation data is not used.

It will be readily appreciated that the circuitry shown in Fig. 2 can be incorporated into a single integrated circuit chip. The image sensor 12 nay suitably be a CMOS image sensor, and the other circuits can then be readily formed in the same CMOS chip.

Many methods to high-pass filter an image are known to those in the art. On of the simplest methods uses a 3x3 matrix operation:

| | | |
|---|---|---|
| -1 | -1 | -1 |
| -1 | 8 | -1 |
| -1 | -1 | -1 |

One useful effect of high-pass filtering of the image is that the DC content (which equates to brightness) of the scene is lost. This is of great advantage for lift-off detection as then the comparison is insensitive to image brightness, and thus insensitive to the reflectivity of the surface on which the mouse is being used. This makes the system robust, as it will enable the technique to operate over a very wide range of mouse surfaces.

It will be seen from the above that the invention operates by detecting the presence of sharply focussed objects in the field of view. If these are present, then the output of the correlation circuit is used to produce the motion vector. If they are not present, then the output of the correlation circuit is suppressed and no motion is indicated by the mouse.

The preferred embodiment does this without complex analysis of focus. However, other methods of determining the presence of sharply focussed objects could be used in the present invention. Various such methods are known, for example:
US4559446 (Suzuki)
US4673276 (Yoshida)
US4980716 (Suzuki)
"The Image Processing Handbook" (Second Edition), John C Russ, ISBN 084932516-1, Chapter 5, section "Measuring images in the frequency domain"

The invention thus provides means for detecting whether a mouse is on a usable surface or off surface (in the air), which is independent of the speed of mouse operation and which is simple and cheap to implement.

## Claims

1. A method of detecting whether an optical mouse is in contact with a working surface, the optical mouse having an image sensor (12) focused to image the working surface and being arranged to provide signals corresponding to said image; the method **characterised by** analysing said signals to determine whether the image contains in-focus objects, and disabling the mouse motion output (20) when no in-focus objects are found.

2. A method according to claim 1, in which the signals are analysed by summing the output of the whole or a majority of each frame, comparing the summed output with a threshold value, and assessing the frame as containing in-focus objects when the threshold value is exceeded.

3. A method according to claim 1 or claim 2, in which the image sensor output is high-pass filtered before being analysed.

4. A method according to claim 3, in which the high-pass filtered signal is also applied to a correlation circuit (16) to correlate successive frames, the correlation forming the input to a motion estimation circuit (18).

5. An optical mouse comprising an image sensor (12) positioned so as, in use, to form an image of a working surface on which the mouse is used, motion signal means (16,18) for producing an output signal (20) representing XY motion of the mouse on the working surface by processing the output of the image sensor (12), and lift-off detection means (24) for detecting the mouse being lifted away from the working surface, the lift-off detection means (24) being arranged to disable said output signal (20) during lift-off;
**characterised in that** said lift-off detection means (24) comprises means for determining whether the image contains in-focus objects.

6. An optical mouse according to claim 5, in which the lift-off detection means (24) comprises a summing circuit (26) arranged to sum the output of the whole or a majority of each frame, and a comparison circuit arranged to compare the summed output with a threshold value and to assess the frame as containing in-focus objects when the threshold value is exceeded.

7. An optical mouse according to claim 5 or claim 6, including a high-pass filter (22) interposed between the image sensor (12) and the summing circuit (26).

8. An optical mouse according to claim 7, in which the motion signal means (16,18) is connected to receive the output of the high-pass filter (22).

9. An optical mouse according to any of claims 5 to 8, in which the motion signal means comprises a correlation circuit (16) providing a measure of the correlation of successive image frames, and a motion estimation circuit (18) deriving a motion signal from said correlation.

10. An integrated circuit comprising:
an image sensor (12) having an array of pixels and operable to read out pixel values to form a picture signal;
analog-to-digital conversion means (14) operable to convert said picture signal to digital format; and
image processing means (16,18) operable to perform correlation on successive frames of the picture signal to derive information therefrom;
**characterised by** lift-off detection means (24) connected between the analog-to-digital conversion means (14) and the image processing means (16,18), said lift-off detection means (24) comprising a summing circuit (26) arranged to sum the output of the whole or a majority of each frame, and a comparison circuit arranged to compare the summed output with a threshold value.

11. An integrated circuit according to claim 10, being a CMOS chip.

12. An integrated circuit according to claim 10 or claim 11, including a high-pass filter (22) interposed between the image sensor (12) and the summing circuit (26).

13. An integrated circuit according to claim 12, in which the image processing means (16,18) is connected to receive the output of the high-pass filter (22).

14. An integrated circuit according to any of claims 10 to 13, in which the image processing means comprises a correlation circuit (16) providing a measure of the correlation of successive image frames, and a motion estimation circuit (18) deriving a motion signal from said correlation.
